# EUROPEAN PATENT SPECIFICATION

(11) **EP 1 756 185 B1**
(45) Date of publication and mention of the grant of the patent: **21.11.2007**
(21) Application number: 05747936.2
(22) Date of filing: 05.05.2005
(51) Int. Cl.: C08G 18/10, C08G 18/76, C08G 18/08

(54) **HIGH PERFORMANCE PARAPHENYLENE DIISOCYANATE BASED POLYURETHANES CURED WITH ALKYLATED 4,4´-METHYLENEDIANILINE**
HOCHLEISTUNGSFÄHIGE, MIT ALKYLIERTEM 4,4'-METHYLENDIANILIN GEHÄRTETE POLYURETHANE AUF BASIS VON PARAPHENYLENDIISOCYANAT
POLYURETHANES HAUTE PERFORMANCE A BASE DE DIISOCYANATE DE PARAPHENYLENE DURCIS AVEC DE LA 4,4´-METHYLENEDIANILINE ALKYLEE

(30) Priority: 13.05.2004 US 846292
(43) Date of publication of application: 28.02.2007
(73) Proprietor: CHEMTURA CORPORATION, Middlebury, CT 06749 (US)
(72) Inventor: ZHU, Zhenya, New Milford, CT 06776 (US); ROSENBERG, Ronald, O., Orange, CT 06477 (US); GAJEWSKI, Vincent, J., Cheshire, CT 06410 (US); NYBAKKEN, George, Middlebury, CT 06762 (US)
(74) Representative: Spott, Gottfried
(86) International application number: PCT/US2005/016511
(87) International publication number: WO 2005/113628

(56) References cited:
- EP-A- 0 387 894
- GB-A- 2 336 847
- US-A- 5 907 014
- US-A- 6 046 297

## Description

### BACKGROUND OF THE INVENTION

### 1. Field of the Invention

This invention relates to castable polyurethane-urea compositions with high temperature property retention and improved processing characteristics, including reduced viscosity of prepolymers and longer pour life, as well as processes for the production of such polyurethane-urea.

### 2. Background of the Art

Polyurethanes are well known as materials useful in highly demanding applications. Typical advantages of polyurethanes include excellent load/bearing properties and superior tear resistance. Property retention at elevated temperature is also sought by users.

Segmented polyurethanes are two-phase polymers, consisting of alternating rigid and flexible blocks, or so-called hard and soft segments. Soft segments are obtained by reacting polyols with diisocyanates; the polyol moieties primarily contribute to the elastic nature of the product. Hard segments, on the other hand, consist of the diisocyanate and chain extender (usually an aromatic diamine or an aliphatic diol). They particularly affect the modulus, hardness and tear strength, and determine the upper use temperature by their ability to remain associated at elevated temperatures.

Aromatic diisocyanates are well known and are widely used in the preparation of polyurethanes and polyurethane/ureas. These aromatic diisocyanates generally include compositions such as 2,4-toluene diisocyanate and 2,6-toluene diisocyanate (TDI); 4,4'-methylene-bis-(phenyl isocyanate) (MDI); p-phenylene diisocyanate (PPDI); and the like.

In the preparation of polyurethanes and polyurethane-ureas, the aromatic diisocyanates are reacted with a long chain (high molecular weight) polyol to produce a prepolymer containing free isocyanate groups. This prepolymer may then be chain extended with a short chain (low molecular weight) polyol or an aromatic diamine to form a polyurethane or polyurethane-urea (known generically as polyurethane or urethane). Upon polymerization, a liquid mixture of prepolymer and chain extender (curative) increases steadily in viscosity until finally a high molecular weight solid is formed.

Among the aromatic diisocyanates, PPDI (p-phenylene diisocyanate) based polyurethanes have been well known as premium materials with superior properties [Advances in Urethane Science and Technology, Vol.13, p112, 1996]. High performance of PPDI material is attributed to the compact, regular and symmetric structure of PPDI, which forms well-defined hard segment domains after reacting with chain extenders. Typically, PPDI materials are good in dynamic properties and high temperature performance. They are particularly suitable for applications where load, speed, and extreme temperature requirements limit the use of other materials.

Numerous diamines, such as 4,4'-methylene bis (o-chloroaniline) (MOCA), are well known chain extenders for polyurethane elastomers. While diamines form good hard segments and provide good properties, they are usually associated with toxicity or processing difficulty. For example, MOCA is a suspect carcinogenic agent. Also, MOCA usually only works well with TDI based prepolymer. Further, MOCA cured TDI material may not be good enough to meet challenging and demanding applications, such as applications in environments of 70°C or above. Load bearing and tear resistance properties of MOCA cured materials drop significantly as the temperature increases.

A different series of amine chain-extending agents for polyurethanes is alkylated methylenedianiline, either chlorinated or non-chlorinated. For example, 4,4'-methylene-bis-(3-chloro-2, 6-diethylaniline) (MCDEA), is available as Lonzacure MCDEA (trademark of the Lonza Corporation). This curative is reportedly lower in toxicity but faster than MOCA to react with isocyanates [Th. Voelker et al. Journal Elastomers and Plastics, 20, 1988 and ibid, 30th Annual Polyurethane Technical/Marketing Conference, October, 1986J. This curative reacts with isocyanate-terminated prepolymers to give materials with desirable properties, especially with PPDI to give exceptional performance at high temperature. However, the high reactivity of MCDEA with PPDI creates difficulty in cure processing.

Problems associated with the high reactivity of MCDEA with PPDI prepolymers include the high viscosity and high melting point of the prepolymers. For example, the melting point of a representative PPDI/polycarbonate prepolymer is 70°C or above. The viscosity of this PPDI/polycarbonate prepolymer is 60 poise at 80°C. With such a high melting point and high viscosity, regular liquid casting has to be processed at ≥ 80°C. However, at that temperature, the high reactivity of MCDEA with the isocyanate groups on the PPDI prepolymer makes pour life extremely short. Casting of many designed parts becomes impractical. There will be no time to mix the curative well with prepolymer, and no time to pour the mixture into molds properly.

In terms of applications, automotive and general industry sectors have been requiring materials performing at higher temperature. People have been developing materials, such as hydrogenated nitrile butadiene rubber (HNBR) and its derivatives to meet the demands, with improved heat resistance and mechanical strength. However, to further promote the mechanical properties and their retention at high temperature is always a challenge in modem needs of engineering materials [Rubber & Plastics News, October 20, 2003, p14]. Comparing PPDI urethane/urea materials cured with MCDEA to HNBR, the performance of the PPDI/MCDEA materials is much superior to that of HNBR. We have found that at 150°C, PPDI materials retain much higher tear strength, and much high elongation than HNBR does. PPDI materials are also more stable in hardness under heat and are higher in tensile strength.

A need exists for more easily processible PPDI urethane-urea materials that retain the excellent high-temperature properties.

### SUMMARY OF THE INVENTION

A polyurethane-urea is provided herein. The polyurethane-urea is prepared by reacting a mixture of p-phenylene diisocyanate terminated urethane prepolymer and at least one plasticizer, and alkylated 4,4'-methylene dianiline chain extenders. The melting point and the viscosity of prepolymers are reduced significantly. Thereafter, the castings of the prepolymers with alkylated methylenedianiline become feasible at lower temperature. Materials become easier to mix together. The mixture becomes easier to fill into molds because of the prolonged pour life.

### DETAILED DESCRIPTION OF THE PREFERRED EMBODIMENT(S)

Use of plasticizers in polyurethane prepolymers is known. However, the mechanical properties of the resulting elastomers are ordinarily impaired by incorporation of plasticizers. See, e.g.: Polyurethane Handbook, 2nd Ed., Gunter Oertel, editor, Hanser Gardner Publications, Inc, p.250 (1994); and VIBRATHANE® Castable Urethane Elastomers for Printing and Coating Rolls, Product Bulletin, Uniroyal Chemical Company, page 17 (1979).

Surprisingly, it has been found that adding certain plasticizers into PPDI prepolymers not only improves the processability in curing with alkylated methylenedianiline, but also retains the high performance of the resulting polymerized elastomers. Extent of the reduction of melting point and viscosity may vary depending on the nature and amount of the plasticizers added. Mechanical properties of MCDEA cured PPDI materials are exceptional even at temperatures as high as 150°C. In other words, plasticizers are used as effective processing aids to the PPDI prepolymers and make the castings of PPDI urethane-urea feasible, resulting in heat resistant materials.

This invention relates to the use of certain plasticizers for PPDI urethane-urea materials. Processing temperature is lowered due to the reduction of viscosity and melting point of the prepolymers. Therefore, it becomes feasible for alkylated methylenedianiline type of amine curatives. For example, 4,4'-methylene-bis-(3-chloro-2, 6-diethylaniline) (MCDEA) and 4,4'-methylene-bis-(2, 6-diethylaniline) (MDEA) were used as curing agents of polyurethane materials. Exceptional properties can be obtained from MCDEA cured plasticized prepolymers prepared from PPDI and polycarbonate and/or polyester polyols; these properties are retained at high temperature after long term heat aging at high temperature.

Both relatively volatile plasticizer such as dibutyl phthalate (DBP) and non volatile ones such as polymeric plasticizers may be added into PPDI prepolymers at the level from 5% to 40% by weight. Melting point of the plasticized prepolymers can be 20°C lower or more. The viscosity of the prepolymers can be reduced by half or more. Cast processing may be carried out at a temperature of 50 - 70°C, in order to get a longer pour life. The plasticizer is preferably inert, i.e., it preferably does not take part in the polymerization reaction.

The plasticized prepolymers cured with alkylated methylenedianiline, for example MCDEA, provide castable urethane articles with the desirable properties at high temperature and enhanced processing characteristics:
1) extended pour life (a slower rate of viscosity build-up after curative and prepolymer are mixed)
2) reduced viscosity of the prepolymer/curative mixture which facilitates the filling of the molds
3) high tensile strength of the elastomers at 150°C after aging at 150°C
4) high tear strength at 150°C after aging at 150°C
5) even higher elongation at 150°C after aging at 150°C vs. initial value
6) little change in hardness at 150°C

The urethane products described in this invention will find use in industrial applications that require toughness retention at very high temperature and extended duration of time. Automobile parts, seal materials and down hole parts in oil fields are a few examples.

It has been surprisingly found that some plasticizers, for example, trimellitate type of plasticizers have a remarkable compatibility with PPDI urethane prepolymers. The boiling point of trimellitates can be high (>500°C). They have a very low tendency of migrating from the urethane matrix to the surface, even when exposed at 150°C for long term. Plasticizers may serve as process aids and be retained in the cured materials. Depending on the amount of the plasticizer added, viscosity of PPDI prepolymers may be reduced to less than half with lowered melting point. These features are highly desirable to the liquid casting with alkylated methylenedianiline cures. Castings may be carried out at 60°C or lower to have manageable pour life. There will be no appreciable plasticizer evaporation during and after cure process. Therefore, they may also reduce the modulus and Tg of the cast elastomers and improve the performance at low temperature.

It has also been found that some plasticizers with relatively low boiling point, such as dibutyl phthalate(DBP), may serve as the processing aid. DBP has a boiling point of 192°C at 10 torr and 340°C at 1 atmosphere. DBP reduces the viscosity of PPDI prepolymers, and lets castings to be carried out at reduced temperature. DBP and other plasticizers with boiling point below 200°C at 10 torr may largely migrate out of the matrix and evaporate after post cure. In this way, the plasticizer will not alter the physical property of the cast materials.

Furthermore, it is surprisingly found that plasticized PPDI urethane-urea materials cured with alkylated methylenedianiline, e.g., MCDEA, retain remarkable properties at elevated temperature, even after long term heat aging. Aged at 150°C for 6 weeks long, then tested at 150°C, parts retain > 50% tear strength, with little change in elongation and hardness compared to the original values tested at room temperature without aging. This is sharply distinguished from other urethane materials and rubber materials such as HNBR_ This exceptional performance at high temperature is achieved by applying plasticizers to make the liquid casting process feasible.

PPDI is compact and symmetric in molecular structure. Alkylated methylenedianilines are the bulky and rigid compounds. Once these two compounds are incorporated with each other and into urethane materials, they form the hard segment that is hard to melt. Furthermore, the urea-containing hard segments with extra H-bonding sites facilitate aggregation and form well-defined hard domains, and promote phase separation. As is well known in the art, good urethane materials come from a good phase separation between hard and soft domains. Indeed, materials disclosed herein exhibit exceptional properties.

For applications at elevated temperature, polycarbonate (PC) and polyester backbone PPDI urethanes are used. In particular, the PPDI/PC has a unique combination of hydrolytic stability, solvent resistance and high temperature performance. Because of the tendency of thermal oxidation, urethanes with polyether backbone are not recommended for the use at high temperature.

To liquid cast the PPDI/carbonate or PPDI/ester prepolymers with alkylated methylenedianiline, up to 40% by weight of plasticizers are preferably added into the prepolymers first. Then the diamine curative is added with the molar ratio of isocyanate groups to amine groups generally at about 0.80 to 1.30, or expressing in another way, 80% to 130% of stoichiometry. The preferable ratio is 0.95 to 1.15, or 95% to 115% of stoichiometry.

Processing of curing urethane prepolymers may be carried out at 20°C - 120 °C , preferably 40°C -100 °C , more preferably 50°C - 90°C, followed by cure/post cure at 100°C -150°C for 16 - 24 hours.

Urethanes are tougher materials compared to other materials. However, property loss at elevated temperature is a common phenomenon. As indicated before, pursuing the property retention and the performance at high temperature is often the mission of the industry. Cured with alkylated methylenedianilines, PPDI based materials accomplish this mission with surprising results, significantly outperforming the HNBR that is currently in the applications at elevated temperature. These novel urethane-ureas are expected to extend applications into new areas.

Suitable plasticizers may include aromatic esters such as phthalates, isophthalates, terephthalates, trimellitates, and benzoates; aliphatic esters such as dialkyl esters and polymeric esters; hydrocarbons incorporating an aromatic moiety; and organic phosphates. Phthalates, trimellitates, and aliphatic esters are preferred. Plasticizers with boiling point at 10 torr above 250°C are preferred, as they will be slow to volatilize from the elastomer under sustained use at high temperature. More preferred are those with boiling point at 10 torr above 300°C.

Alternatively, plasticizers with boiling point below 200°C at 10 torr may be used and then deliberately volatilized from the elastomer before it is put into service. Suitable volatilization conditions include temperatures above 100°C, preferably under vacuum.

Suitable chain extenders (curatives) may include derivatives of 4,4'-methylene dianiline with one or more alkyl groups at the 2, 3, 5, or 6 ring positions, and optionally one or more halogen groups (fluorine, chlorine, bromine, iodine) at remaining 2, 3, 5, or 6 ring positions. Preferred are those derivatives with methyl, ethyl, propyl, or butyl groups at both the 2 and 6 position on each of the two rings (hence four alkyl groups total). More preferred are 4,4'-methylene-bis-(3-chloro-2, 6-diethylaniline) (MCDEA) and 4,4'-methylene-bis-(2, 6-diethylaniline) (MDEA). See Formula I below: 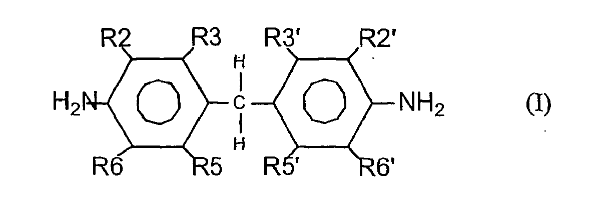 wherein R2, R2', R3, R3', R5, R5', R6, R6' are H or alkyl groups or halogen groups

Optionally, in addition to the 4,4'methylenedianiline chain extender, the reaction mixture can additionally include short or long chain diols, triols, or tetrols.

Suitable polyol soft segments for the prepolymer include those comprising carbonate and/or ester linkages, with molecular weight of 250 to 12,000. Examples include polycarbonate polyols derived from 1,6-hexanediol and dialkyl or diaryl carbonate monomers; polyester polyols derived from 1,4-butanediol and adipic acid monomers; and polycaprolactone polyols derived from diol and epsilon-caprolactone monomers.

the following non-limiting examples illustrate the preparation of the novel PPDI urethane/urea materials made from alkylated methylenedianiline, ex. MCDEA. Properties of the samples will follow these examples.

### EXAMPLE I

To 90 g of ADIPRENE® LFP 3940A (Crompton Corporation) was added 10g dibutyl phthalate (DBP) plasticizer (Eastman Chemicals). ADIPRENE® LFP 3940A is a PPDI terminated polycarbonate backbone prepolymer. This prepolymer/plasticizer mixture can be prepared in accordance with the procedure set forth in U.S. Patent No. 5,703,193, which is herein incorporated by reference, and which contains about 3.3% wt of available isocyanate groups and an unreacted PPDI monomer content of below about 0.1% by weight. The mixture was fully agitated and 13.5 g molten MCDEA was added and mixed. This final mixture was poured into molds and cured/post cured at 127°C (260°F) for 16 hours. Tough parts were obtained after demolding after the curing cycle.

### EXAMPLE II

To 90 g of ADIPRENE® LFP 3940A p-phenylene diisocyanate terminated polycarbonate backbone prepolymer was added 10g diisopropyl naphthalene, a plasticizer from RKS under the name Ruetasolv DI. This prepolymer/plasticizer contains about 3.0wt % of available isocyanate groups. The mixture was fully agitated and 13.5g molten MCDEA was added and mixed. This final mixture was poured into molds and cured/post cured at 127°C (260°F) for 16 hours. Tough parts were obtained after demolding after curing cycle.

### EXAMPLE III

To 90 g of ADIPRENE® LFP 3940A p-phenylene diisocyanate terminated polycarbonate backbone prepolymer was added 10g triisononyl trimellitate (JAYFLEX-TINTM) that is a plasticizer from Exxon Mobil. This plasticizer has a boiling point higher than 300°C at 10 torr. This prepolymer/plasticizer contains about 3.0% by weight of available isocyanate groups. The mixture was fully agitated and 13.5g molten MCDEA was added and mixed. This final mixture was poured into molds and cured/post cured at 127°C (260°F) for 16 hours. Tough parts were obtained after demolding after curing cycle.

### EXAMPLE IV

To 80 g of ADIPRENE® LFP 3940A was added 20g JAYFLEX TINTM. This prepolymer/plasticizer contains about 2.6% wt of available isocyanate groups. The mixture was fully agitated and 11.7g molten MCDEA was added and mixed. This final mixture was poured into molds and cured/post cured at 127°C (260°F) for 16 hours. Tough parts were obtained after demolding after curing cycle.

### EXAMPLE V

To 80 g of ADIPRENE® LFP 3940A was added 20g Paraplex A-8200, a polymeric ester type plasticizer from C.P.HALL. This prepolymer/plasticizer contains about 2.6wt% of available isocyanate groups. The mixture was fully agitated and 11.7g molten MCDEA was added and mixed. This final mixture was poured into molds and "cured/post cured at 127°C (260°F) for 16 hours. Tough parts were obtained after demolding after curing cycle.

### EXAMPLE VI

To 90 g of ADIPRENE® LFP 1950A (a PPDI terminated polyester prepolymer having a low free PPDI content, available from Crompton Corporation) was added 10g dibutyl phthalate (DBP). This prepolymer/plasticizer contains about 2.9% wt of available isocyanate groups. The mixture was fully agitated and 13.0g molten MCDEA was added and mixed. This final mixture was poured into molds and cured/post cured at 127°C (260°F) for 16 hours. Tough parts were obtained after demolding after curing cycle.

The following comparative examples do not demonstrate the invention.

### COMPARATIVE EXAMPLE A

This is a demonstration of failed hot liquid casting of ADIPRENE® LFP 3940A, using MCDEA without adding the plasticizer to reduce viscosity. Casting process has to be carried out at the temperature at least 80°C to have the prepolymer fully melted.

To 14.8 g of molten MCDEA was added 100 g of ADIPRENE® LFP 3940A at 80°C. Without using the plasticizer, this prepolymer contains about 3.3wt % of available isocyanate groups and is very viscous. The mixture was agitated. However, pour life was too short to pour the mixture into molds. Casting was abandoned.

### COMPARATIVE EXAMPLE B

This is a demonstration of a hot liquid casting of ADIPRENE® LFP 1950A, without adding plasticizer. The casting process is carried out at 65°C using MCDEA as the curative. Viscosity of the prepolymer is high at that temperature so that the casting is difficult.

To 14.4 g of molten MCDEA was added 100 g of ADIPRENE® LFP 1950A at 65°C. Without using the plasticizer, this prepolymer contains about 3.2wt % of available isocyanate groups and is very viscous. The mixture was agitated and was poured into molds. Due to the high viscosity of the mixture during process, after demolding after curing cycle, parts were not as even comparing to that from the castings with adding plasticizers.

### COMPARATIVE EXAMPLE C

This sample is a typical hot liquid casting of a conventional MDI prepolymer with diol. Parts made from this casting are used as the comparison to the amine cured PPDI materials as described in the previous examples for aging and testing.

To 8.0g of 1,4-butanediol was added 100 g of VIBRATHANE® 8522 prepolymer (a polyester based MDI terminated liquid urethane prepolymer, available from Crompton Corporation) at 90°C. This prepolymer contains about 7.7% wt of available isocyanate groups and is prepared from polyester glycol and MDI. The mixture was fully agitated and then was poured into molds and cured/post cured at 100°C (212°F) for 16 hours. Cured parts were obtained after demolding after curing cycle. These parts were heat aged and tested and compared to the alkylated methylenedianiline cured parts of PPDI prepolymers.

### COMPARATIVE EXAMPLE D

This sample is a typical hot liquid casting of TDI prepolymer with MOCA. Parts made from this sample are used as the comparison to the amine cured PPDI materials described in the previous examples in aging and testing.

To 10.1g of MOCA was added 100 g of ADIPRENE® LF1800A (a TDI terminated polyester prepolymer having a low free TDI content and low viscosity, available from Crompton Corporation) at 90°C. This prepolymer contains about 3.2% wt of available isocyanate groups and is prepared from polyester glycol and TDI. The mixture was fully agitated and then was poured into molds and cured/post cured at 100°C (212°F) for 16 hours. Cured parts were obtained after demolding after curing cycle. Cast parts were heat aged and tested and compared to the alkylated methylenedianiline cured parts of PPDI prepolymers.

Representative data of the improvement of cast processing via plasticizer are given in Table 1.

**TABLE 1**

| Processing characteristics of plasticized PPDI prepolymers with MCDEA | | | | |
|---|---|---|---|---|
| | LFP3940A | | LFP1950A | |
| | no plast. | 20% TINTM | no plast. | 10% DBP |
| Viscosity at 80°C, poise | 60 | 22 | 18 | 10 |
| | | | | |
| Pour life, minute (prepolymer 65°C, MCDEA 95°C) | --- | 1.5 | 1.3 | 1.5 |

The data above show that at 10-20% plasticizer level, viscosity of PPDI prepolymers has been significantly reduced. Especially for PPDI/polycarbonate prepolymer (LFP3940A), it is not feasible to do the regular liquid casting without process aid.

Representative data of the retention of plasticizers in the cast PPDI urethane/urea materials are listed in Table 2.

**TABLE 2**

| Weight retention of cast PPDI urethane-ureas with low volatile and relatively high volatile plasticizers | | | | |
|---|---|---|---|---|
| | 150°C/1 wk | 150°C/2 wk | 150°C/3 wk | 150°C/6 wk |
| LFP3940A/10%TINTM/MCDEA | 99.1% | 98.1% | 98.3% | 96.9% |
| | | | | |
| LFP3940A110%DBP/MCDEA | 91.2% | 90.9% | --- | --- |

Triisononyl trimellitate (TINTM) plasticizer has relatively low volatility (i.e., a boiling point of above about 250°C at 10 torr) and is highly compatible with PPDI urethane/urea. It serves as both a processing aid and also is well retained in the cast parts.

Dibutyl phthalate (DBP) plasticizer has a relatively high volatility (i.e., a boiling point of below about 200°C at 10 torr). It serves as a processing aid but will evaporate after the cast part is exposed to high temperature over a period of time. As shown in the table above, DBP basically left the elastomer after heated at 150°C for a week.

Physical property retention of novel PPDI urethane/urea materials after heat aging is demonstrated in Table 3.

**TABLE 3**

| Property retention of novel PPDI urethane-urea materials and the comparison with conventional urethane materials and HNBR | | | | | |
|---|---|---|---|---|---|
| | LFP3940A/MCDEA | LFP1950A/MCDEA | 8522/BDO | LF1800/MOCA | HNBR |
| | 15%TINTM | 10% DBP | | | |
| Tested at RT, un-aged | | | | | |
| 100% modulus, psi | 1210 | 1060 | 1110 | 700 | 2030 |
| 300% modulus, psi | 2500 | 1630 | 2920 | 1400 | ----- |
| Tensile, psi | 6200 | 7330 | 5900 | 7100 | 2830 |
| Elongation, % | 460 | 550 | 390 | 600 | 210 |
| Break energy, 10³ psi (tensile X elongation) | 2852 | 4032 | 2301 | 4260 | 594 |
| Split tear, pli | 155 | 160 | 95 | 125 | 25 |

| Tested at 150°C, after aged at 150°C/3 wks | | | | | |
|---|---|---|---|---|---|
| 100% modulus, psi | 900 | 820 | --- | 220 | ---- |
| 300% modulus, psi | 1020 | 880 | ---- | ---- | ---- |
| Tensile, psi | 1480 | 1230 | 130 | 240 | 1210 |
| Elongation, % | 900 | 850 | 90 | 220 | 20 |
| Break energy, 10³ psi (tensile X elongation) | 1332 | 1046 | 12 | 53 | 24 |
| Split tear, pli | 105 | 145 | <5 | <5 | <5 |

| Tested at 150°C, after aged at 150°C/6 wks | | | | | |
|---|---|---|---|---|---|
| 100% modulus, psi | 790 | 700 | N/A | N/A | * |
| 300% modulus, psi | 930 | 800 | N/A | N/A | * |
| Tensile, psi | 1040 | 890 | N/A | N/A | * |
| Elongation, % | 560 | 540 | N/A | N/A | * |
| Break energy, 10³ psi (tensile X elongation) | 582 | 481 | | | |
| Split tear, pli | 90 | 85 | N/A | N/A | * |

| | | | | | |
|---|---|---|---|---|---|
| * HNBR sample is too brittle to run the test at 150°C after aged at 150°C for 6 weeks. | | | | | |

Table 3 above strongly evidences that novel plasticized PPDI urethane-urea materials are much superior over the HNBR and conventional urethane materials in high temperature performance:
1. Before heat aging, break energy (approximated as tensile times elongation) and tear strength of plasticized PPDI urethane/ureas are 3 - 6 times higher than that ofHNBR.
2. After being aged at 150°C for 3 weeks and tested at 150°C, HNBR lost elasticity. While conventional MDI and TDI materials are tough and comparable to PPDI before the aging, they significantly lost tensile strength and modulus after heat aging. PPDI urethane/urea becomes more than 20 times higher than HNBR and others in break energy. The gap between tear strength is increased as well.
3. After aged at 150°C for 6 weeks, HNBR had become so brittle that no testing could be run at 150°C, while PPDI urethane/ureas still retain respectable physical strength.

Hardness retention of novel plasticized PPDI urethane/urea materials after heat aging is demonstrated in Table 4.

**TABLE 4**

| Hardness retention of novel plasticized PPDI urethane-urea materials and the comparison with HNBR | | | |
|---|---|---|---|
| | LFP3940A/MCDEA | LFP1950A/MCDEA | HNBR |
| | 10% DBP | 10% DBP | |
| At RT, initial hardness | 93A | 92A | 90A |
| At RT, after 150°C/3 weeks | 92A | 91A | 96A |
| At 150°C, after 150°C/3 weeks | 92A | 90A | 93A |

Novel plasticized PPDI urethane-ureas have little change in hardness after being aged at 150°C. HNBR is hardened and becomes brittle.

Effect of plasticizer on the toughness of PPDI urethane-urea vs. other urethane is compared in Table 5.

**TABLE 5**

| Effect of plasticizer on touglmess retention of novel PPDI urethane-urea and the comparison with conventional TDI material | | | | |
|---|---|---|---|---|
| | LFP1950A/MCDEA | | Vibrathane6007/TMP-TIPA* | |
| | no plast. | 10% DBP | no plast. | 10% Benzoflex** |
| 100% modulus, psi | 1260 | 1060 | 310 | 220 |
| 300% modulus, psi | 2050 | 1630 | 830 | 560 |
| Tensile, psi | 8210 | 7330 | 3800 | 2500 |
| Elongation, % | 490 | 550 | 400 | 450 |
| Break energy, 10³ psi (tensile X elongation) | 4023 | 4032 | 1520 | 1125 |
| Split tear, pli | 165 | 160 | 14 | 11 |

| | | | | |
|---|---|---|---|---|
| *VIBRATHANE® 6007 is a TDI terminated polyester prepolymer with 4.2% NCO. TMP is trimethylolpropane. TIPA is triisopropanolamine. TMP-TIPA is at 3/1 ratio. Data from VIBPATHANE® Castable Urethane Elastomers for Printing and Coating Rolls, Product Bulletin, Uniroyal Chemical Company, page 17 (1979). ** Benzoflex 9-88 SG is a plasticizer named for dipropylene glycol dibenzoate. | | | | |

Plasticized PPDI urethane-urea has little change in break energy and tear strength, while conventional TDI material retains only about 75% of the original strength after using 10% plasticizer.

While the above description includes many specifics, these specifics should not be construed as limitations on the scope of the inventions, but merely as exemplifications of preferred embodiments thereof. Those skilled in the art will envision many other possibilities within the scope and spirit of the invention as defined by the claims appended hereto.

## Claims

1. A polyurethane-urea prepared by reacting a mixture of a p-phenylene diisocyanate-terminated urethane prepolymer, at least one plasticizer, and alkylated 4,4'-methylenedianiline chain extender.

2. The polyurethane-urea of Claim 1 in which the plasticizer is selected from the group consisting of phthalates, isophthalates, terephthalates, trimellitates, benzoates, dialkyl esters, polymeric esters, hydrocarbons incorporating an aromatic moiety, organic phosphates and combinations thereof.

3. The polyurethane-urea of Claim 2 in which the alkylated 4,4'-methylenedianiline chain extender is selected from the group consisting of 4,4'-methylenedianiline possessing methyl, ethyl, propyl, or butyl groups at the 2 and 6 positions on each of the two rings.

4. The polyurethane-urea of Claim 2 in which the alkylated 4,4'-methylenedianiline chain extender includes at least one compound selected from the group consisting of 4,4'-methylene-bis-(3-chloro-2, 6-diethylaniline) and 4,4'-methylene-bis-(2, 6-diethylaniline).

5. The polyurethane-urea of Claim 2 in which the alkylated 4,4'-methylenedianiline chain extender comprises 4,4'-methylene-bis-(3-chloro-2, 6-diethylaniline).

6. The polyurethane-urea of Claim 2 in which the p-phenylene diisocyanate terminated urethane prepolymer comprises p-phenylene diisocyanate and a polycarbonate moiety and/or a polyester moiety.

7. The polyurethane-urea of Claim 2 in which the plasticizer has a boiling point higher than 300°C at 10 torr.

8. The polyurethane-urea of Claim 2 in which the plasticizer has a boiling point lower than 200°C at 10 torr and in which more than half of the plasticizer has been evaporated from the elastomer at a temperature of 100°C or higher, subsequent to the formation of the elastomer.

9. The polyurethane-urea of Claim 1 wherein the polyurethane urea molecular structure includes one or more alkyl groups on chlorinated phenyl rings.

10. The polyurethane-urea of Claim 1 wherein the polyurethane urea molecular structure includes one or more alkyl groups on phenyl rings which are not chlorinated.

11. The polyurethane-urea of Claim 1 wherein the molar ratio of isocyanate groups on p-phenylene diisocyanate-terminated prepolymer to amine groups on alkylated 4,4'-methylenedianiline chain extender is from about 0.80 to about 1.30.

12. The polyurethane-urea of Claim 1 wherein the molar ratio of isocyanate groups on the p-phenylene diisocyanate to amine groups on the alkylated 4,4'-methylenedianiline chain extender is from about 0.95 to about 1.15.

13. The polyurethane-urea of Claim 1 wherein the plasticizer possesses a boiling point above 250°C at 10 torr.

14. The polyurethane-urea of Claim 1 wherein the plasticizer possesses a boiling point below 200°C at 10 torr.

15. The polyurethane-urea of Claim 1 wherein the plasticizer is used at the range of from about 5 % to about 40% by weight based on the cured polyurethane elastomer.

16. The polyurethane-urea of Claim 1 wherein the plasticizer is preferably used at the range of from about 10% to about 30% by weight based on the cured polyurethane elastomer.

17. The polyurethane urea of Claim 1 wherein the chain extender has the molecular formula (1) below: 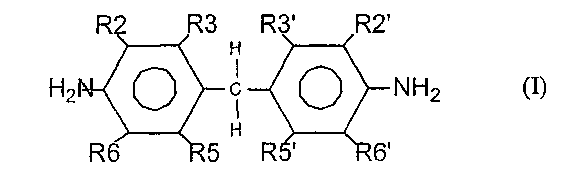 wherein R2, R2', R3, R3', R5, R5', R6, R6' are H or alkyl groups or halogen groups
wherein at least one of R2, R2', R3, R3', R5, R5', R6 and R6' is an alkyl group and the remaining are independently hydrogen, alkyl or halogen.

18. The polyurethane-urea of Claim 17 wherein the alkyl group is methyl, ethyl, propyl or butyl.

19. The polyurethane-urea of Claim 17 wherein at least one of R2, R2', R3, R3', R5, R5', R6 and R6' is chlorine.

20. The polyurethane-urea of Claim 17 wherein all of said R2, R2', R3, R3', R5, R5', R6 and R6' are alkyl groups.

## Patentansprüche

1. Polyurethanharnstoff, hergestellt durch Umsetzung eines Gemischs eines Urethan-Prepolymers mit endständigem p-Phenylendiisocyanat, mindestens eines Weichmachers und alkylierten 4,4'-Methylendianilin-Kettenverlängerers.

2. Polyurethanharnstoff nach Anspruch 1, bei dem der Weichmacher ausgewählt ist aus der Gruppe, bestehend aus Phthalaten, Isophthalaten, Terephthalaten, Trimellitaten, Benzoaten, Dialkylestern, polymeren Estern oder Polyestern, Kohlenwasserstoffen, die einen aromatischen Rest enthalten, organischen Phosphaten und Kombinationen davon.

3. Polyurethanharnstoff nach Anspruch 2, bei dem der alkylierte 4,4'-Methylendianilin-Kettenverlängerer ausgewählt ist aus der Gruppe, bestehend aus 4,4'-Methylendianilin, das Methyl-, Ethyl-, Propyl- oder Butylgruppen an den 2- und 6-Positionen an jedem der zwei Ringe besitzt.

4. Polyurethanharnstoff nach Anspruch 2, bei dem der alkylierte 4,4'-Methylendianilin-Kettenverlängerer mindestens eine Verbindung einschließt, die ausgewählt ist aus der Gruppe, bestehend aus 4,4'-Methylen-bis-(3-chlor-2,6-diethylanilin) und 4,4'-Methylen-bis-(2,6-diethylanilin).

5. Polyurethanharnstoff nach Anspruch 2, bei dem der alkylierte 4,4'-Methylendianilinkettenverlängerer 4,4'-Methylen-bis-(3-chlor-2,6-diethylanilin) umfasst.

6. Polyurethanharnstoff nach Anspruch 2, bei dem das Urethan-Prepolymer mit enständigem p-Phenylendiisocyanat p-Phenylendiisocyanat und einen Polycarbonatrest und/oder einen Polyesterrest umfasst.

7. Polyurethanharnstoff nach Anspruch 2, bei dem der Weichmacher einen Siedepunkt von größer als 300°C bei 10 Torr aufweist.

8. Polyurethanharnstoff nach Anspruch 2, bei dem der Weichmacher einen Siedepunkt von weniger als 200°C bei 10 Torr aufweist und bei dem mehr als die Hälfte des Weichmachers aus dem Elastomer bei einer Temperatur von 100°C oder höher verdampft worden ist nach der Bildung des Elastomers.

9. Polyurethanharnstoff nach Anspruch 1, wobei die Polyurethanharnstoffmolekularstruktur eine oder mehrere Alkylgruppe(n) an chlorierten Phenylringen einschließt.

10. Polyurethanharnstoff nach Anspruch 1, wobei die Polyurethanharnstoffmolekülsturktur eine oder mehrere Alkylgruppe(n) an Phenylringen, die nicht chloriert sind, einschließt.

11. Polyurethanharnstoff nach Anspruch 1, wobei das molare Verhältnis von Isocyanatgruppen am Prepolymer mit enständigem p-Phenylendiisocyanat zu Amingruppen am alkylierten 4,4'-Methylendianilin-Kettenverlängerer von etwa 0,80 bis etwa 1,30 beträgt.

12. Polyurethanharnstoff nach Anspruch 1, wobei das molare Verhältnis von Isocyanatgruppen an dem p-Phenylendiisocyanat zu Amingruppen an dem alkylierten 4,4'-Methylendianilin-Kettenverlängerer von etwa 0,95 bis etwa 1,15 beträgt.

13. Polyurethanharnstoff nach Anspruch 1, wobei der Weichmacher einen Siedepunkt oberhalb von 250°C bei 10 Torr besitzt.

14. Polyurethanharnstoff nach Anspruch 1, wobei der Weichmacher einen Siedepunkt unterhalb von 200°C bei 10 Torr besitzt.

15. Polyurethanharnstoff nach Anspruch 1, wobei der Weichmacher in dem Bereich von etwa 5 Gew.-% bis etwa 40 Gew.-%, bezogen auf das gehärtete Polyurethanelastomer, verwendet wird.

16. Polyurethanharnstoff nach Anspruch 1, wobei der Weichmacher vorzugsweise in dem Bereich von etwa 10 Gew.-% bis etwa 30 Gew.-%, bezogen auf das gehärtete Polyurethanelastomer, verwendet wird.

17. Polyurethanharnstoff nach Anspruch 1, wobei der Kettenverlängerer die Molekularformel (1) von unten aufweist: 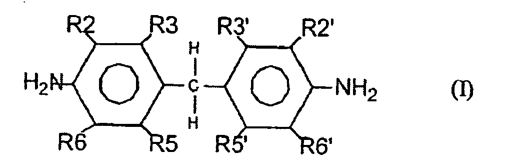 wobei R2, R2', R3, R3', R5, R5', R6 und R6' für H oder Alkylgruppen oder Halogengruppen stehen, wobei mindestens eines von R2, R2', R3, R3', R5, R5', R6 und R6' für eine Alkylgruppe steht und die verbleibenden unabhängig für Wasserstoff, Alkyl oder Halogen stehen.

18. Polyurethanharnstoff nach Anspruch 17, wobei die Alkylgruppe für Methyl, Ethyl, Propyl oder Butyl steht.

19. Polyurethanharnstoff nach Anspruch 17, wobei mindestens eines von R2, R2', R3, R3', R5, R5', R6 und R6' für Chlor steht.

20. Polyurethanharnstoff nach Anspruch 17, wobei alle der R2, R2', R3, R3', R5, R5', R6 und R6' für Alkylgruppen stehen.

## Revendications

1. Polyuéthanne-urée préparée par réaction d'un mélange d'un prépolymère d'uréthanne terminé par un p-phénylènediisocyanate, d'au moins un plastifiant et de l'allongeur de chaîne 4,4'-méthylènedianiline.

2. Polyuréthanne-urée selon la revendication 1, dans laquelle le plastifiant est choisi parmi le groupe consistant en des phtalates, des isophtalates, des téréphtalates, des trimellitates, des benzoates, des esters dialkyle, des esters polymères, des hydrocarbures comprenant une partie aromatique, des phosphates organiques et leurs combinaisons.

3. Polyuréthanne-urée selon la revendication 2, dans laquelle l'allongeur de chaîne 4,4'-méthylène-dianiline est choisi parmi le groupe consistant en les 4,4'-méthylènedianilines possédant des radicaux méthyle, éthyle, propyle ou butyle en les positions 2 et 6 de chacun des deux cycles.

4. Polyuréthanne-urée selon la revendication 2, dans laquelle l'allongeur de chaîne 4,4'-méthylène-dianiline comprend au moins un composé choisi parmi le groupe consistant en la 4,4'-méthylène-bis(3-chloro-2,6-diéthylaniline) et la 4,4'-méthylène-bis(2,6-diéthylaniline).

5. Polyuréthanne-urée selon la revendication 2, dans laquelle l'allongeur de chaîne 4,4'-méthylène-dianiline comprend la 4,4'-méthylène-bis(3-chloro-2,6-diéthylaniline).

6. Polyuréthanne-urée selon la revendication 2, dans laquelle le prépolymère d'uréthanne à terminaison p-phénylènediisocyanate comprend le p-phénylènediisocyanate et une partie polycarbonate et/ou une partie polyester.

7. Polyuréthanne-urée selon la revendication 2, dans laquelle le plastifiant a un point d'ébullition supérieur à 300°C à 10 Torr.

8. Polyuréthanne-urée selon la revendication 2, dans laquelle le plastifiant a un point d'ébullition inférieur à 200°C à 10 Torr et dans laquelle plus de la moitié du plastifiant a été évaporée de l'élastomère à une température de 100°C ou plus, suite à la formation de l'élastomère.

9. Polyuréthanne-urée selon la revendication 1, dans laquelle la structure moléculaire de la polyuréthanne-urée comprend un ou plusieurs radicaux alkyle sur des cycles phényle chloré.

10. Polyuréthanne-urée selon la revendication 1, dans laquelle la structure moléculaire de la polyuréthanne-urée comprend un ou plusieurs radicaux alkyle sur des cycles phényle, qui ne sont pas chlorés.

11. Polyuréthanne-urée selon la revendication 1, dans laquelle le rapport molaire des radicaux isocyanate du prépolymère à terminaison p-phénylène-diisocyanate aux radicaux amine sur l'allongeur de chaîne 4,4'-méthylènedianiline alkylée se situe dans l'intervalle allant d'environ 0,80 à environ 1,30.

12. Polyuréthanne-urée selon la revendication 1, dans laquelle le rapport molaire des radicaux isocyanate du p-phénylènediisocyanate aux radicaux amine sur l'allongeur de chaîne 4,4'-méthylènedianiline alkylée se situe dans l'intervalle allant d'environ 0,95 à environ 1,15.

13. Polyuréthanne-urée selon la revendication 1, dans laquelle le plastifiant présente un point d'ébullition supérieur à 250°C à 10 Torr.

14. Polyuréthanne-urée selon la revendication 1, dans laquelle le plastifiant présente un point d'ébullition inférieur à 200°C à 10 Torr.

15. Polyuréthanne-urée selon la revendication 1, dans laquelle le plastifiant est utilisé dans la gamme allant d'environ 5% à environ 40% en poids, sur base de l'élastomère de polyuréthanne durci.

16. Polyuréthanne-urée selon la revendication 1, dans laquelle le plastifiant est utilisé de préférence, dans la gamme allant d'environ 10% à environ 30% en poids, sur base de l'élastomère de polyuréthanne durci.

17. Polyuréthanne-urée selon la revendication 1, dans laquelle l'allongeur de chaîne a la formule moléculaire (1) ci-dessous : 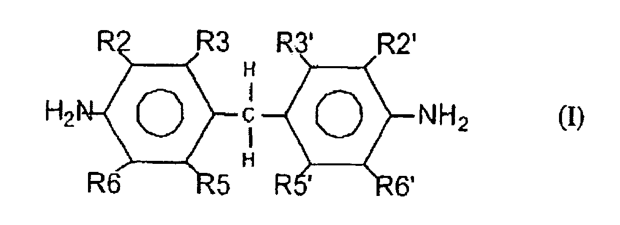 dans laquelle R2, R2', R3, R3', R5, R5', R6 et R6' sont H ou un groupe alkyle ou un groupe halogène,
où au moins un de R2, R2', R3, R3', R5, R5', R6 et R6'est un groupe alkyle et les autres sont indépendamment hydrogène, alkyle ou halogène.

18. Polyuréthanne-urée selon la revendication 17, dans laquelle le groupe alkyle est méthyle, éthyle, propyle ou butyle.

19. Polyuréthanne-urée selon la revendication 17, dans laquelle au moins un de R2, R2', R3, R3', R5, R5' , R6 et R6' est chlore.

20. Polyuréthanne-urée selon la revendication 17, dans laquelle tous les R2, R2', R3, R3', R5, R5', R6 et R6' sont des groupes alkyle.
